# EUROPÄISCHE PATENTSCHRIFT

(11) **EP 0 710 620 B1**
(45) Veröffentlichungstag und Bekanntmachung des Hinweises auf die Patenterteilung: **22.12.1999**
(21) Anmeldenummer: 95116702.2
(22) Anmeldetag: 24.10.1995
(51) Int. Cl.: B66C 17/00, B66F 19/00, B60S 5/00

(54) **Traggestell für Hebebrücke mit Tragplatte**
Support stand for lift with support plate
Tablier de support pour pont élévateur avec plaque support

(30) Priorität: 05.11.1994 DE 9417788 U
(43) Veröffentlichungstag der Anmeldung: 08.05.1996
(73) Patentinhaber: Klann, Horst, D-78052 Villingen-Schwenningen (DE)
(72) Erfinder: Klann, Horst, D-78052 Villingen-Schwenningen (DE)
(74) Vertreter: Neymeyer, Franz, Dipl.-Ing. (FH)

(56) Entgegenhaltungen:
- EP-A- 0 611 726
- DE-U- 8 627 720
- DE-U- 9 409 121
- DE-U- 9 412 054
- US-A- 4 774 386

## Beschreibung

Die Erfindung betrifft eine Hebebrücke zum Aus- und Einbauen von Kraftfahrzeugteilen bestehend aus wenigstens einer Tragschiene, auf welcher wenigstens eine Hebeeinrichtung angeordnet ist und die an beiden Enden Stützfüße aufweist, mit welchen die Tragschiene an den oberen Rändern eines geöffneten Motorraums eines Kraftfahrzeuges abstützbar ist, wobei die Hebeeinrichtung ein flexibles Zugelement aufweist, an welchem ein Kupplungselement befestigbar ist.

Es ist eine Hebebrücke der gattungsgemäßen Art bekannt (DE-U 93 02 395.2), welche für den Einsatz über einer Motorraumöffnung eines Kraftfahrzeuges vorgesehen ist, bei dem die Motorhaube abgenommen oder hochgeklappt ist. Die in Fahrzeuglängsrichtung verlaufenden Ränder der Motorraumöffnung weisen jeweils einen in Querrichtung des Fahrzeuges horizontal verlaufenden Befestigungssteg für den jeweiligen Kraftfahrzeugkotflügel auf, auf welchen der zugehörige Kotflügel mit einem entsprechenden Montagesteg aufgeschraubt oder aufgeschweißt ist.

Die bekannte Hebevorrichtung wird beim Einsatz mit ihren Stützfüßen auf die Montagestege der an den Befestigungsstegen montierten Kotflügel gestellt und verläuft im wesentlichen quer zur Fahrzeuglängsachse. Die Stützfüße sind jeweils über Vertikalstreben mit Schwenkplatten verbunden, zwischen welchen jeweils zwei in einem Abstand parallel zueinander ausgerichtete Tragschienen angeschweißt sind. Jede Tragschiene besteht aus zwei teleskopartig ineinander geschobenen quadratischen Rohren, so daß die Hebebrücke auf den jeweiligen Abstand der Montagestege der Motorraumöffnung variabel einstellbar ist. Die beiden Tragschienen sind an den Schwenkplatten so befestigt, daß jeweils eine ihrer Diametralebenen in Gebrauchslage zumindest annähernd vertikal verläuft. Auf den Tragschienen sind zwei Hebeeinrichtungen angeordnet, welche in ihrem Aufbau identisch ausgebildet sind. Jede Hebeeinrichtung weist zwei im entsprechenden Abstand voneinander angeordnete parallele Führungsrohre auf, mit welchen sie auf den Tragschienen verschiebbar geführt ist. Desweiteren ist jede der Hebeeinrichtungen mit einem Schneckengetriebe zur Betätigung eines flexiblen Zugelementes versehen, welches zwischen den Tragschienen hindurch nach unten in den Motorraum hängend hineinragt. Die Zugelemente sind als Gliederkette ausgebildet und weisen an ihrem unteren Ende jeweils einen Befestigungshaken auf.

Die bekannte Hebebrücke wird dazu eingesetzt, einen Motor oder auch ein Getriebe oder beides zusammen im Motorraum eines Kraftfahrzeuges anzuheben, so daß z.B. schadhafte Motorhalterungselemente austauschbar sind. Zum Anheben eines Motors ist dieser an vorbestimmten Stellen mit Hebelaschen versehen, in welche die Zughaken der Gliederkette einhängbar sind. Bei verschiedenen Fahrzeugtypen sind die Hebelaschen an unterschiedlichen Stellen und in unterschiedlicher Anzahl angeordnet, so daß in extremen Fällen die bekannte Hebebrücke zum Erreichen dieser von den Hebelaschen bestimmten Haltepunkten diagonal über dem Motorraum angeordnet werden muß. Diese diagonale Anordnung ist dadurch möglich, daß die Stützfüße gegenüber den Stützbeinen um eine vertikale Achse verdrehbar sind, so daß bei diagonal verlaufender Hebebrücke die Stützfüße parallel zu den Montagestegen der Kotflügel auf diesen anordenbar sind.

In ungünstigen Fällen jedoch ist die bekannte Hebebrücke selbst bei diagonaler Anordnung nicht einsetzbar, da durch die extreme Leichtbauweise im Frontbereich moderner Pkw-Karosserien die Montagestege keine ausreichende Stabilität aufweisen, um z.B. dem hohen Gewicht eines Kraftfahrzeugmotors beim Anheben standhalten zu können. In diesen Fällen sind dementsprechend die Haltepunkte des Kraftfahrzeugmotors mit den Zughaken der Gliederkette nicht optimal oder gar nicht erreichbar. Desweiteren kann bei der bekannten Hebebrücke der angehobene Kraftfahrzeugmotor nicht in genügender Weise zusätzlich abgesichert werden, was insbesondere bei Arbeiten, die unterhalb des Motors bzw. Motorraumes ausgeführt werden müssen, zu einer Gefährdung des Monteurs führt.

Weiter ist eine Hebebrücke der gattungsgemäßen Art bekannt (DE-U 94 09 121.8), welche ebenfalls aus zwei parallel zueinander verlaufenden teleskopartig ausziehbaren Tragschienen besteht. Auf den Tragschienen sind eine oder zwei Hebeeinrichtungen verschiebbar geführt. Die Tragschienen sind an ihren beiden Enden mit Stützfüßen versehen, mit welchen sie an den oberen Rändern eines Motorraums abstützbar sind. Die Hebeeinrichtungen dieser Hebebrücke weisen ebenfalls ein flexibles Zugelement, an welchem jeweils ein Kupplungselement befestigbar ist. An den Kupplungselementen ist ein verstellbares Traggestell vorgesehen. Durch diese Ausgestaltung soll die eigentliche Hebebrücke mit ihren Tragschienen stets in einem Bereich der Befestigungsstege des Motorraumes auf diesen aufsetzbar sein, in welchen die Befestigungsstege der Kotflügel eine genügend große Steifigkeit zum Anheben des Kraftfahrzeugmotors aufweisen. Durch die Verstellbarkeit des Traggestelles soll dieses an beliebig positionierte, durch die Haltelaschen eines Kraftfahrzeugmotors oder auch Getriebes bestimmte Haltepunkte anpaßbar sein.

Das Traggestell besteht aus einem oder mehreren teleskopartig ineinander verstellbaren Vierkantrohren, welche über Steckzapfen in ihrer Einstellung fixierbar sind. Für unterschiedliche Einsatzbedingungen müssen die Teleskoprohre unterschiedlich miteinander kombiniert werden, um das Traggestell an die verschiedenen Einsatzbedingungen anpassen zu können. So besteht das Traggestell in seiner einfachsten Ausgestaltung aus einem zentralen Teleskoprohr, an dessen beiden Enden jeweils im wesentlichen vertikal nach unten gerichtete Zuglaschen angeschraubt sind. Diese Zuglaschen sind mit den Hebelaschen des Motors eines Kraftfahrzeuges verbindbar, um den Motor anheben zu können. Kann diese einfache Ausführungsform des Traggestells auf Grund einer ungünstigen Anordnung der Hebelaschen am Motor des Kraftfahrzeuges nicht eingesetzt werden, so ist eine Modifizierung des Traggestells notwendig. Zu dieser Modifikation ist vorgesehen, daß weitere, entsprechend ausgestaltete Teleskoprohre gegenseitig variabel miteinander verbindbar sind. Dies bedeutet, daß das Traggestell vorab, für jeden Einsatz umgebaut und an die genauen Einsatzbedingungen angepaßt werden muß. Somit ist dieses Traggestell für den variablen Einsatz einer Hebebrücke allenfalls mit großem Aufwand verwendbar, wobei je nach Einsatzbedingungen nur ein Teil sämtlicher Teleskoprohre zum Einsatz kommt. Desweiteren sind die Kupplungselemente mit dem Traggestell oberseitig zum Zugelement hin in vorbestimmten, unveränderbaren Positionen verschraubt, so daß ein variable Anpassung z.B. an den Schwerpunkt eines zu hebenden Kraftfahrzeugmotors nur bedingt durch die Verstellung der Teleskoprohre möglich ist.

Demgemäß liegt der Erfindung die Aufgabe zugrunde, eine Hebebrücke der gattungsgemäßen Art derart zu verbessern, daß diese einerseits auch bei ungünstigen Anordnungen der Hebelaschen eines Kraftfahrzeugmotors einsetzbar ist, wobei eine zusätzliche Absicherung der angehobenen Last möglich sein soll und daß diese andererseits leicht zu handhaben und an die gegebenen Einsatzbedingungen in einfacher Weise anpaßbar ist.

Die Aufgabe wird erfindungsgemäß dadurch gelöst, daß zum Anheben der Kraftfahrzeugteile eine im wesentlichen in einer Horizontalebene verlaufende Tragplatte vorgesehen ist, welche wenigstens das eine Kupplungselement aufweist, mit welchem die Tragplatte am Zugelement lösbar befestigt ist, und daß das Kupplungselement an der Tragplatte an unterschiedlichen Stellen anordenbar ist und, daß an der Tragplatte zum Anhängen der Kraftfahrzeugteile ein oder mehrere an verschiedenen Stellen der Tragplatte befestigbare Verbindungselemente vorgesehen sind.

Durch die erfindungsgemäße Ausgestaltung der Hebebrücke wird vorteilhaft erreicht, daß die eigentliche Hebebrücke mit ihren Tragschienen stets in einem Bereich der Befestigungsstege des Motorraumes auf diese aufsetzbar ist, in welchen die Befestigungsstege bzw. die Montagestege der Kotflügel eine genügend große Steifigkeit zum Anheben beispielsweise eines Kraftfahrzeugmotors aufweisen. Dadurch, daß das Kupplungselement an verschieden Stellen der Tragplatte anordenbar ist, läßt sich die Tragplatte relativ zum anzuhebenden Bauteil so an der Hebebrücke anhängen, daß die an dem Bauteil z.B. an einem Kraftfahrzeugmotor an vorbestimmten Stellen angeordneten Haltepunkte mit den an unterschiedlichen Stellen der Tragplatte befestigbaren Verbindungselementen einfach erreichbar sind. Desweiteren ist durch die flexible Anordenbarkeit des Kupplungselementes die Tragplatte so an der Hebebrücke anhängbar, daß der Schwerpunkt der Gesamtanordnung aus Tragplatte, Verbindungselemente und anzuhebendem Bauteil direkt unterhalb des Aufhängepunktes des Kupplungselementes liegt, so daß beim Anheben des Bauteils dieses keine unerwünschten Schwenkbewegungen ausführt und aus seiner Ursprungslage ohne abzukippen anhebbar ist.

Durch die Ausgestaltung gemäß Anspruch 2 wird eine kostengünstige und einfache Bauweise erreicht, wobei die Ringschraube in entsprechend in der Tragplatte angeordnete Gewindebohrungen eingeschraubt oder durch entsprechend angeordnete Durchgangsbohrungen und mittels einer Mutter an der Tragplatte festgeschraubt sein kann. Zur Anpassung an verschiedene Fahrzeugtypen, deren Aufhängepunkte bekannt sind, können auch mehrere Ringschrauben an der Tragplatte vormontiert sein, so daß zusätzliche Montagearbeiten zum Umrüsten der Tragplatte durch entsprechende Veränderung der Lage nur einer Ringschraube an der Tragplatte beim wechselnden Einsatz bei verschiedenen Fahrzeugtypen mit unterschiedlich angeordneten Aufhängepunkten entfallen.

Durch die erfindungsgemäße Ausgestaltung gemäß Anspruch 3, wird eine variable Einstellbarkeit des Kupplungselementes an der Tragplatte erreicht, wobei die Lage des Kupplungselementes an der Tragplatte stufenlos in seinem Stellschlitz mittels der Stellspindel zur Anpassung an den jeweils vorliegenden Schwerpunkt der Gesamtanordnung bestehend aus der Tragplatte, den Verbindungselementen und dem angehängten Bauteil in einfacher Weise bei angehängtem Bauteil veränderbar ist.

Durch die erfindungsgemäße Ausgestaltung gemäß Anspruch 4, ist die Tragplatte variabel aus ihrer Horizontalebene schräg zu den Tragschienen verlaufend anhebbar. Dies kann insbesondere beim Aus- und Einbau eines Getriebes bei quer eingebautem Kraftfahrzeugmotor notwendig sein, um das Getriebe bei abgekipptem Kraftfahrzeugmotor nach unten aus dem Motorraum herausnehmen zu können. Desweiteren ist durch die vorgesehene Sicherheitsstange, welche längenverstellbar zwischen den Tragschienen und der Tragplatte angeordnet ist eine zusätzliche Sicherheit gegeben. Die Sicherheitsstange ist der jeweiligen Hubhöhe der Hebebrücke anpaßbar, so daß die Zugelemente durch die Sicherheitsstange während der notwendigen Arbeiten am angehobenen Bauteil entlastbar sind und ein Bruch der Zugelemente sicher verhindert werden kann. Damit wird ein Höchstmaß an Sicherheit erreicht.

Die schwenkbare Befestigung der Sicherheitsstange an ihrem Kupplungselement gemäß Anspruch 5 ermöglicht dabei ein Kippen der Tragplatte aus ihrer in Ausgangsstellung befindlichen Horizontalebene.

Durch die erfindungsgemäße Ausgestaltung der Verbindungselemente gemäß Anspruch 6 ist die Hebebrücke bzw. die Tragplatte variabel für unterschiedliche Kraftfahrzeugtypen einsetzbar, wobei die Verbindungselemente in einfachster Weise durch Einhängen oder mittels eines Tragzapfens mit den Hebelaschen des jeweils anzuhängenden Bauteils verbindbar sind.

Durch die erfindungsgemäße Ausgestaltung gemäß Anspruch 7 sind auch Anhängepunkte an einem beispielsweise längs in einem Kraftfahrzeug eingebauten Kraftfahrzeugmotor erreichbar, welche nicht unterhalb der Tragplatte liegen. Dies hat den Vorteil, daß die Tragplatte in ihrer Größe nicht die komplette Motorraumöffnung abdecken muß, sondern wesentlich kleiner und damit auch leichter ausgebildet sein kann. Das Trägerelement ist dabei an der Tragplatte an unterschiedlich positionierten Tragbohrungen in unterschiedlichen Richtungen gegenüber der Tragplatte befestigbar.

Durch die erfindungsgemäße Ausgestaltung der Hebebrücke gemäß Anspruch 8 ist die Tragplatte bei in unterschiedlichen Höhenlagen angeordneten Haltepunkten der anzuhebenden Bauteile stets in ihrer im wesentlichen horizontalen Ausgangsstellung einsetzbar. Durch die Längenverstellbarkeit der Verbindungselemente bzw. durch ihre Höhenverstellbarkeit an der Tragplatte sind bei horizontaler Ausgangsstellung der Tragplatte auch in verschiedenen Höhenlagen angeordnete Haltepunkte eines Kraftfahrzeugmotors und/oder eines Getriebes erreichbar.

Durch die erfindungsgemäße Ausgestaltung gemäß Anspruch 9 wird eine variable Einstellmöglichkeit der Lage des Kupplungselementes gegenüber der Tragplatte erreicht, wobei das Kupplungselement gegenüber der Tragplatte sowohl in Längsrichtung als auch in Querrichtung zur Tragplatte verschiebbar ist. Dadurch ist insbesondere bei der Verwendung lediglich einer Hebeeinrichtung mit einem Zugelement und auch nur eines entsprechend zugeordneten Kupplungselementes, eine variable Einstellmöglichkeit zur Berücksichtigung der jeweiligen Schwerpunktlage der Gesamtanordnung, bestehend aus Tragplatte, Verbindungselementen und angehobenem Bauteil, ermöglicht. Durch die vorgesehenen Stellspindeln ist der Einstellvorgang auch unter Last, d.h. bei angehobenem Bauteil durchführbar, so daß auch Schwerpunktverlagerungen während durchzuführender Montagearbeiten jederzeit berücksichtigbar sind.

Im folgenden wird die Erfindung anhand der Zeichnung näher erläutert. Es zeigt:
- Fig. 1: eine Hebebrücke mit Traggestell im Einsatz über dem offenen Motorraum eines Kraftfahrzeuges in perspektivischer Ansicht;
- Fig. 2: die Tragplatte aus Fig. 1 im Schnitt durch eines der Zugelemente;
- Fig. 3: einen Teilschnitt III-III aus Fig. 2;
- Fig. 4: die Tragplatte aus Fig. 1 im Schnitt durch die Sicherheitsstange;
- Fig. 5: einen Teilschnitt IV-IV aus Fig. 4;
- Fig. 6: eine Teilansicht eines Eckbereiches der Tragplatte mit einem zusätzlichen Trägerelement;
- Fig. 7: eine zweite Ausführungsform einer Tragplatte mit Einstellplatte in Frontansicht;
- Fig. 8: eine Teilansicht VIII-VIII aus Fig. 7;
- Fig. 9: eine Unteransicht IX der Tragplatte mit Einstellplatte aus Fig. 8.

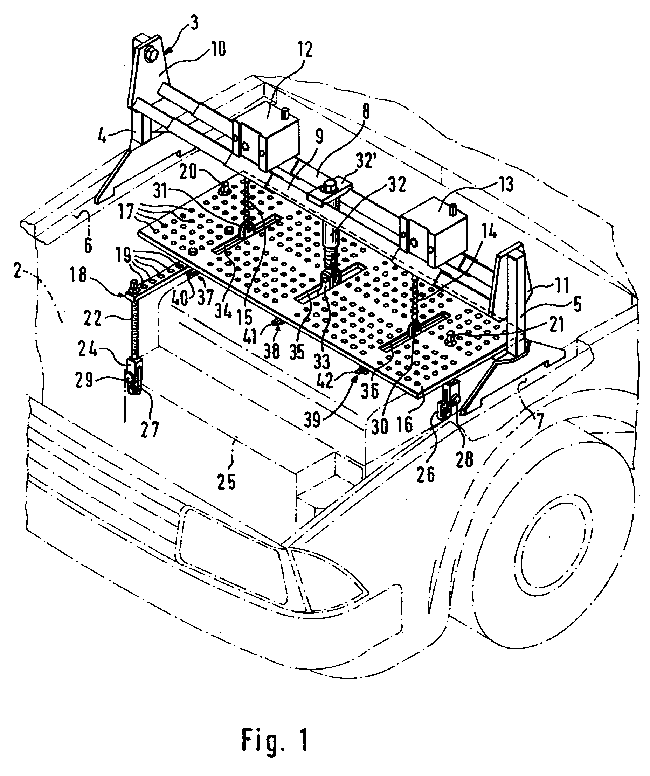

Fig. 1 zeigt die Frontpartie eines Kraftfahrzeuges 1 mit geöffnetem Motorraum 2 in einer perspektivischen Teilansicht. Oberhalb des Motorraumes 2 ist eine Hebebrücke 3 angeordnet, welche mit zwei Vertikalstützen 4, 5 versehen ist, mit welchen die Hebebrücke 3 auf die Kotflügelmontagestege 6 und 7 des Kraftfahrzeuges 1 aufgesetzt ist.

Die Hebebrücke 3 weist zwei in Arbeitsposition im wesentlichen quer zur Fahrzeuglängsrichtung verlaufende Tragschienen 8, 9 auf, welche über an ihren Enden angeschweißte Schwenkplatten 10, 11 an der jeweils zugehörigen Vertikalstütze 4 bzw. 5 schwenkbar gelagert sind. Auf den Tragschienen 8, 9 sind zwei Hebeeinrichtungen 12, 13 längs verschieblich geführt. Die Hebeeinrichtungen 12, 13 weisen jeweils ein als Gliederkette ausgebildetes flexibles Zugelement 14 bzw. 15 auf, an deren unterem Ende eine Tragplatte 16 befestigt ist. Die Tragplatte 16 ist im wesentlichen rechteckförmig ausgebildet und erstreckt sich in ihrer vertikalen Längssymmetrieebene in Ausgangsstellung etwa parallel zu den Tragschienen 8, 9 bzw. quer zur Längsmittelachse des Kraftfahrzeuges 1.

Die Tragplatte 16 weist mehrere Tragbohrungen 17 auf, welche zur Befestigung von Verbindungselementen dienen. Wie aus Fig. 1 ersichtlich ist, ist an der Tragplatte 16 ein Trägerelement 18 angeschraubt, welches über die Tragplatte 16 in Fahrzeuglängsrichtung nach vorne hinausragt. Das Trägerelement 18 ist als U-Stahl ausgebildet und weist mehrere Trägerbohrungen 19 auf, welche einerseits zur Befestigung des Trägerelementes 18, mittels entsprechender Schraubverbindungen, an der Tragplatte 16 und andererseits zur Aufnahme eines Verbindungselementes dienen.

Als Verbindungselemente sind beispielhaft drei Zugspindeln 20, 21, 22 vorgesehen, von denen die Zugspindeln 20 und 21 in den entsprechenden Tragbohrungen 17 der Tragplatte 16 höhenverstellbar befestigt sind und die Zugspindel 22 am äußeren Ende des Trägerelementes 18 in eine entsprechende Trägerbohrung 19 des Trägerelementes 18 höhenverstellbar befestigt ist. Von der Zugspindel 20 ist in Fig. 1 lediglich dessen oberes, über die Tragplatte 16 nach oben hinausstehendes Ende sichtbar. Die Zugspindeln 20, 21, 22 weisen an ihrem unteren Ende jeweils eine Traggabel 23, 24 auf, wobei die Traggabel der Zugspindel 20 in der Zeichnung nicht sichtbar ist. Die Traggabeln 23, 24 dienen beispielsweise zum Anhängen eines, in Fig. 1 in Phantomlinien dargestellten Kraftfahrzeugmotors 25, welcher zu diesem Zweck an vorbestimmten Stellen mit Haltelaschen 26, 27 versehen ist. Die Haltelaschen 26 und 27 weisen zur Befestigung an der jeweils zugehörigen Traggabel 23, 24 an ihrem oberen Ende jeweils eine Querbohrung auf, so daß sie mittels jeweils eines Steckzapfens 28, 29 mit der jeweils zugehörigen Traggabel 23 bzw. 24 formschlüssig in Eingriff bringbar sind.

Die Tragplatte 16 ist an den Zugelementen 14, 15 über zwei Kupplungselemente 30, 31 angehängt.

Zur Absicherung der Tragplatte 16 ist eine Sicherheitsstange 32 vorgesehen, welche mit ihrem oberen Ende über eine quer zu den Tragschienen 8, 9 verlaufende Halteplatte 32' an den Tragschienen 8, 9 längsverschieblich befestigt ist. Mit ihrem unteren Ende ist die Sicherheitsstange 32 über ein entsprechendes Kupplungselement 33 an der Tragplatte 16 befestigt. Die Sicherheitsstange 32 ist dabei am Kupplungselement 33 um eine parallel zur Längsmittelachse des Kraftfahrzeuges 1 verlaufende Achse schwenkbar befestigt. Die Kupplungselemente 30, 31, 33 sind an der Tragplatte 16 in jeweils einem Stellschlitz 34, 35, 36 parallel zur Längsmittelachse des Kraftfahrzeuges 1 bzw. quer zur Tragplatte 16 verschiebbar angeordnet. Zum Verschieben der Kupplungselemente 30, 31, 33 ist unterhalb der Tragplatte 16 jeweils eine Stellspindel 37, 38, 39 vorgesehen, welche jeweils mit einem frontseitigen Antriebssechskant 40, 41, 42 versehen sind.

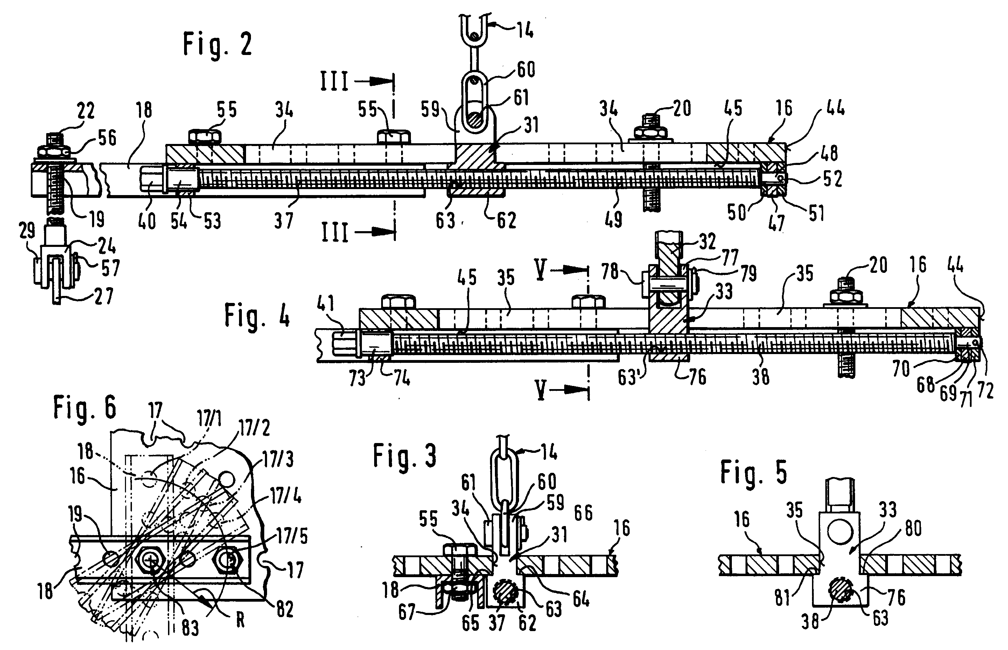

Fig. 2 zeigt einen Teilschnitt durch die Tragplatte 16, wobei die Schnittführung durch die Stellspindel 37 aus Fig. 1 verläuft. In Fig. 2 ist desweiteren das U-förmig ausgebildete Trägerelement 18 mit der zugehörigen Zugspindel 22 erkennbar. Die Stellspindel 37 ist unterhalb der Tragplatte 16 angeordnet und verläuft parallel zur Plattenebene der Tragplatte 16, von deren Vorderkante 43 bis zu deren Hinterkante 44. Im Bereich der Hinterkante 44 der Tragplatte 16 ist an der Unterseite 45 der Tragplatte ein vertikal nach unten gerichteter Lagersteg 47 befestigt, in welchem die Stellspindel 37 mit einem entsprechenden Lagerzapfen 48 drehbar gelagert ist. Der Lagerzapfen 48 ist gegenüber dem Gewindeabschnitt der Stellspindel 37 im Durchmesser verjüngt abgesetzt ausgebildet und durchragt den Lagersteg 47. Zwischen dem Lagersteg 47 und dem Gewindeabschnitt 49 der Stellspindel 37 ist eine Anschlagscheibe 50 vorgesehen, welche auf dem Lagerzapfen 48 der Stellspindel 37 gelagert ist. An seinem hinteren, durch den Lagersteg 47 hindurchragenden Ende, ist der Lagerzapfen 48 mit einer scheibenförmigen Befestigungsplatte 51 versehen, welche beispielsweise mit einem Kerbstift 52 unverlierbar auf dem Lagerzapfen 48 befestigt ist. Somit ist die Stellspindel 37 mit ihrem Lagerzapfen über die Anschlagscheibe und die Befestigungsplatte axial unverschieblich am Lagersteg 47 gelagert. Im Bereich der Vorderkante 43 weist die Tragplatte 16 einen zweiten vertikal nach unten gerichteten Lagersteg 53 auf, in welchem die Stellspindel 37 mit einem antriebssechskantseitigen, zylindrisch ausgebildeten Lagerabschnitt 54 gelagert ist. Der Antriebssechskant 40 der Stellspindel 37 überragt die Vorderkante 43 der Tragplatte 16 in horizontaler Richtung, so daß er zum Betätigen der Stellspindel 37 frei zugänglich ist. An der Unterseite 35 ist das Trägerelement 18 mittels zweier Schrauben 55 und 56 befestigt. Das Trägerelement 18 überragt dabei die Tragplatte 16 vorderkantenseitig und weist an seinem äußeren Ende 55 die Zugspindel 22 auf, welche z.B. durch die äußerste Trägerbohrung 19 von unten nach oben hindurchgesteckt ist und mittels einer entsprechenden Stellmutter 56 höhenverstellbar am Trägerelement 18 befestigt ist.

An seinem unteren Ende weist die Zugspindel 22 die Traggabel 24 auf, welche zur Befestigung der Zugspindel 22 an der Haltelasche 27 des Kraftfahrzeugmotors dient. Sowohl die Traggabel 24 als auch die Haltelasche 27 sind zu diesem Zweck jeweils mit Durchgangsbohrungen versehen, so daß die Haltelasche 27 und die Traggabel 24 mit dem Steckzapfen 29 miteinander formschlüssig verbindbar sind. Zur Sicherung des Steckzapfens 29 ist ein Splint 57 vorgesehen.

Das Kupplungselement 31 ist im Stellschlitz 34 längsverschieblich geführt und weist eine vertikal nach oben über die Tragplatte überstehende Kupplungsgabel 58 auf, zwischen deren Schenkel das als Zugkette ausgebildete Zugelement 14 mit seinem untersten Kettenglied 60 über einen entsprechenden Steckzapfen 61 mit dem Kupplungselement 31 verbunden ist. Unterhalb der Tragplatte 16 weist das Kupplungselement 31 einen Stellabschnitt 62 auf, welcher mit einem Durchgangsgewinde 63 versehen ist und mittels welchem das Kupplungselement 31 durch die Stellspindel 37 im Stellschlitz 34 längs verschiebbar ist.

Wie Fig. 3 zeigt ist der stellabschnitt 62 des Kupplungselementes 31 in seiner Breite größer als die Breite des Stellschlitzes 34 und weist zwei seitliche an der Unterseite 45 der Tragplatte 16 anliegende Anschlagflächen 64 und 65 auf. Über die Anschlagflächen 64, 65 wird die Tragplatte 16 vom Kupplungselement 31 gehalten und ist im Stellschlitz 34 annähernd spielfrei längsverschieblich geführt. Zur Befestigung des unteren Kettengliedes 60 des Zugelementes 14 ist der Steckzapfen 61 durch entsprechende Bohrungen der Kupplungsgabel 59 hindurchgesteckt und mittels eines Sicherungssplintes 66 unverlierbar gehalten. Wie aus Fig. 3 ebenfalls ersichtlich ist, ist das Trägerelement 18 durch zwei Befestigungsschrauben 55 und entsprechenden Muttern 67 an der Tragplatte 16 angeschraubt.

Der Stellantrieb des Kupplungselementes 30 mit seiner Stellspindel 39 in seinem Stellschlitz ist identisch ausgebildet wie der oben beschriebene Stellantrieb des Kupplungselementes 31 und in der Zeichnung nicht näher dargestellt.

Fig. 4 zeigt einen Schnitt der Tragplatte 16, welche etwa in der Längssymmetrieebene des Stellschlitzes 35 der Tragplatte 16 liegt. Unterhalb der Tragplatte 16 ist die Stellspindel 38 angeordnet, welche unterhalb der Tragplatte 16 entsprechend der Stellspindel 37 gelagert ist. D.h. im Bereich der Hinterkante 44 der Tragplatte 16 ist ein Lagersteg 68 vorgesehen, in welchem die Stellspindel 38 mittels eines Lagerzapfens 69 drehbar gelagert ist. Zur axial unverschieblichen Befestigung der Stellspindel mit ihrem Lagerzapfen 69 im Lagersteg 68 ist ebenfalls eine Anschlagscheibe 70 und eine Befestigungsplatte 71 vorgesehen, wobei die Befestigungsplatte 71 auf dem Lagerzapfen 69 mittels eines Kerbstiftes 72 festsitzend befestigt ist. Die Stellspindel 38 ist identisch ausgebildet wie die Stellspindel 37 und antriebssechskantseitig über einen Lagerabschnitt 73 und einem entsprechenden Lagersteg 74 an der Unterseite 45 der Tragplatte 16 drehbar gelagert. Die Stellspindel 38 überragt mit ihrem Antriebssechskant 41 ebenfalls die Tragplatte 16 vorderkantenseitig.

Das Kupplungselement 33 der Sicherheitsstange 32 weist einen unterhalb der Tragplatte 16 angeordneten und mit einem Durchgangsgewinde 75 versehenen Stellabschnitt 76 auf, über welchen das Kupplungselement 33 über die Stellspindel 38 im Stellschlitz 35 längsverschieblich bewegbar ist. Zur Aufnahme der Sicherheitsstange 32 weist das Kupplungselement 33 eine Kupplungsgabel 77 auf, zwischen deren Gabelholmen die Sicherheitsstange 32 hineinragt und mittels eines Steckzapfens 78 in der Kupplungsgabel 77 schwenkbar gelagert ist. Der Steckzapfen 78 ist ebenfalls durch einen Sicherungssplint 79 unverlierbar in den entsprechenden Durchgangsbohrungen der Kupplungsgabel gesichert.

Wie aus Fig. 5 ersichtlich ist, ist das Kupplungselement 33 in seiner Breite der Breite des Stellschlitzes 35 derart angepaßt, daß das Kupplungselement 33 im Stellschlitz 35 annähernd spielfrei längsverschieblich geführt ist. Der unterhalb der Tragplatte 16 angeordnete Stellabschnitt 76 des Kupplungselementes 33 ist breiter ausgebildet als der Stellschlitz 35 und bildet zwei Anschlagflächen 80 und 81, mittels welcher das Kupplungselement 33 an der Unterseite 45 der Tragplatte 16 längsverschieblich anliegt. In dieser Position ist die Stellspindel 38 mit dem Durchgangsgewinde 63' des Stellabschnittes 76 im Eingriff.

Fig. 6 zeigt einen Eckbereich der Tragplatte 16 in einer Ansicht von unten. An der Unterseite ist das Trägerelement 18 durch zwei Schraubverbindungen 82, 83 angeschraubt. Die in der Tragplatte 16 vorgesehenen Tragbohrungen 17 sind dabei so angeordnet, daß das Trägerelement 18 in unterschiedlichen Richtungen bezüglich der Tragplatte 16 verlaufend an der Tragplatte 16 anschraubbar ist. Dabei sind beispielsweise die Tragbohrungen 17/1, 17/2, 17/3, 17/4 und 17/5 auf einem Kreisradius **R** angeordnet, welcher beispielsweise dem doppelten Abstand zweier benachbarter Trägerbohrungen 19 des Trägerelementes 18 entspricht. Durch entsprechende Wahl der Anordnung der Tragbohrungen 17/1, 17/2, 17/3, 17/4 und 17/5 ist das Trägerelement 18 in unterschiedlichen Winkelstellungen bezüglich der Tragplatte 16 an dieser anschraubbar, wie dies aus Fig. 6 durch die in Phantomlinien dargestellten Stellungen des Trägerelementes 18 dargestellt ist. Durch diese Möglichkeit der Montage des Trägerelementes 18 an der Unterseite der Tragplatte 16 wird erreicht, daß die Tragplatte 16 relativ klein ausgebildet sein kann und trotzdem über die entsprechende Anordnung des Trägerelementes 18 an der Tragplatte 16 unterschiedliche Haltepunkte, beispielsweise an einem Kraftfahrzeugmotor erreichbar sind, welche nicht direkt vertikal unterhalb der Tragplatte angeordnet sind.

Es versteht sich, daß die Tragbohrungen 17 bis 17/5 nicht nur in den Eckbereichen der Tragplatte 16 wie oben beschrieben angeordnet sein können, sondern daß eine derartige Anordnung der Tragbohrungen 17 in jedem Bereich der Tragplatte 16 vorgesehen sein kann, so daß das Trägerelement 18 auch in einem mittleren Bereich der Tragplatte 16 in unterschiedlichen Winkelstellungen zur Tragplatte 16 an dieser anschraubbar ist.

Durch die Längsverschieblichkeit der Kupplungselemente 30, 31 und 33 ist es desweiteren möglich, die Tragplatte 16 bezüglich der Tragschienen 8, 9 der Hebebrücke 3 so anzuordnen, so daß sie mit ihrer vertikalen Längssymmetrieebene bzw. mit ihrer Vorderkante 43 und ihrer Hinterkante 44 nicht mehr parallel sondern schräg zu den Tragschienen 8, 9 der Hebebrücke 3 verläuft. Dadurch wird erreicht, daß die Tragplatte 16 mit ihren Tragbohrungen 17 so über dem Kraftfahrzeugmotor drehbar ist, daß sie mit ihren Tragbohrungen 17 bzw. mit einer ihrer Tragbohrungen 17 jeweils vertikal über dem entsprechend am Kraftfahrzeugmotor 25 angeordneten Haltepunkt einstellbar ist. Damit ist z.B. der entsprechende Haltepunkt in einfacher Weise mit einer in der ausgerichteten Tragbohrung 17 angeordneten Zugspindel 20, 21 oder 22 erreichbar.

Durch die erfindungsgemäße Ausgestaltung der Tragplatte 16 mit ihren wie in den entsprechenden Stellschlitzen 34, 35, 36 verschiebbar angeordneten Kupplungselementen 30, 31, 33 sowie durch das vorgesehene Trägerelement 18, von welchem selbstverständlich auch mehrere vorsehbar sind, wird eine variable Einsatzmöglichkeit der Tragplatte 16 bzw. der gesamten Hebebrücke 3 geschaffen.

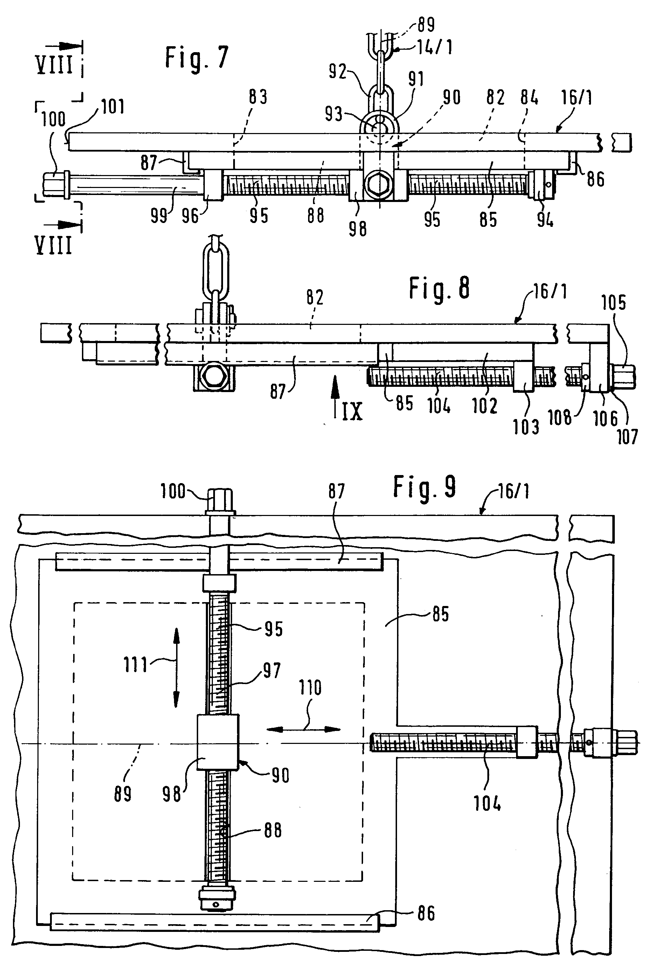

Fig. 7 zeigt eine weitere Ausführungsform 16/1 der Tragplatte 16 in Frontansicht. Die Tragplatte 16/1 weist einen etwa rechteckförmigen Durchbruch 82 auf, welcher in Ausgangsstellung von einer Einstellplatte 85 abgedeckt ist. Der Durchbruch 82 ist durch eine Vorderkante 83 und eine Hinterkante 84 begrenzt, welche im wesentlichen parallel zur Längsmittelebene 89 der Tragplatte 16/1 verlaufen. Die Einstellplatte 85 ist an der Unterseite der Tragplatte 16/1 angeordnet und mittels zweier parallel zur Längsmittelebene 89 der Tragplatte 16/1 verlaufender, etwa L-förmig ausgebildeter Führungsschienen 86, 87 entlang der Tragplatte 16/1 verschiebbar geführt.

Die Tragplatte 16/1 ist, wie die Tragplatte 16, ebenfalls mit Tragbohrungen versehen, welche aus Gründen der Übersichtlichkeit in der Zeichnung nicht dargestellt sind.

Die Einstellplatte 85 weist einen zentralen, quer zur Längsmittelebene 89 der Tragplatte 16/1 bzw. quer zu den Führungsschienen 86, 87 verlaufenden Stellschlitz 88 auf, in welchem ein Kupplungselement 90 quer zur Längsmittelebene 89 verschiebbar geführt angeordnet ist. Das Kupplungselement 90 ist zum Ankoppeln an das, als Gliederkette ausgebildete Zugelement 14/1 mit einer Kupplungsgabel 91 versehen. Mit seinem untersten Kettenglied 92 ist das Kupplungselement 14/1 über einen entsprechenden Tragbolzen 93 zwischen den beiden Gabelschenkeln (Fig. 8) befestigt. An der Unterseite der Einstellplatte 85 ist im Bereich seiner einen Führungsschiene 86 ein Lagersteg 94 vorgesehen, in welchem eine Stellspindel 95 drehbar und in ihrer Achsrichtung quer zur Längsmittelebene 89 unverschiebbar gelagert ist. Im Bereich seiner zweiten Führungsschiene 87 ist an der Unterseite der Einstellplatte 85 ein zweiter Lagersteg 95 vorgesehen, welchen die Stellspindel 95 axial durchragt.

Die Stellspindel 95 weist zum Verschieben des Kupplungselementes 90 im Stellschlitz 88 einen Gewindeabschnitt 96 auf, welcher in ein entsprechendes Mutterngewinde eines Stellabschnittes 98 des Kupplungselementes 90 eingreift.

Die Stellspindel 95 ist zur Lagerung im Lagersteg 96 mit einem entsprechenden Lagerschaftabschnitt 99 versehen, mit welchem sie annähernd spielfrei im Lagersteg 96 drehbar gelagert ist. Zur Betätigung der Stellspindel 95 weist diese einen Antriebssechskant 100 auf, welcher die vordere Stirnseite 101 der Tragplatte 16/1 horizontal überragt und somit zur Betätigung der Stellspindel 95 frei zugänglich ist.

Fig. 8 zeigt eine Seitenansicht VIII-VIII aus Fig. 7 der Tragplatte 16/1. Unterhalb der Tragplatte 16/1 ist die Einstellplatte 85 in der gezeigten Ausgangsstellung direkt unterhalb des Durchbruches 82 der Tragplatte 16/1 angeordnet. Desweiteren ist die vordere Führungsschiene 87 erkennbar, welche im vorliegenden Ausführungsbeispiel in ihrer Länge kürzer ausgebildet ist als die Länge der Einstellplatte 85.

Die Einstellplatte 85 weist einen Einstellsteg 102 auf, welcher sich parallel zur Längsmittelebene der Tragplatte 16/1 bzw. parallel und symmetrisch zu den Führungsschienen 86 bzw. 87 erstreckt. An seinem freien Ende weist der Einstellsteg 102 eine vertikal nach unten gerichtete Stellplatte 103 auf, in dessen Gewinde eine zweite Stellspindel 104 eingeschraubt ist. Die Stellspindel 104 verläuft parallel zum Einstellsteg 102 und endet mit ihrem freien Gewindeende in der gezeigten Ausgangsstellung der Einstellplatte 85 etwa im Bereich der Führungsschiene 86 bzw. 87. Die Stellspindel 104 ist mit einem Antriebssechskant 105 versehen und in einem Lagersteg 106 an der Unterseite der Tragplatte 16/1 drehbar und axial unverschiebbar gelagert.

Zur axialen Festlegung der Stellspindel 104 im Lagersteg 106 ist die Stellspindel 104 zwischen ihrem Antriebssechskant 105 und dem Lagersteg 106 mit einem radial nach außen vorspringenden, umlaufenden Bundsteg 107 versehen, wobei diesem gegenüberliegend auf der Stellspindel 104 eine Befestigungsplatte 108 angeordnet ist. Die Befestigungsplatte 108 weist zum Bundsteg 107 einen Abstand auf, welcher in etwa der Breite des Lagersteges 106 entspricht. Die Befestigungsplatte 108 ist axial unverschiebbar auf der Stellspindel mittels eines Kerbstiftes 108 gesichert.

Fig. 9 zeigt die Gesamtanordnung der Tragplatte 16/1 mit der Einstellplatte 85 sowie den Stellspindeln 95 und 104 in einer Unteransicht IX aus Fig. 8.

Durch Betätigen der Stellspindel 104 verschiebt sich die Stellplatte 103 der Einstellplatte 85 in den Führungsschienen 86, 87 parallel zur Längsmittelebene 89 der Tragplatte 16/1, je nach Drehrichtung der Stellspindel 104, in einer der beiden durch den Doppelpfeil 110 gekennzeichneten Richtungen. Mit der Einstellplatte 85 verschiebt sich gleichzeitig auch der Stellabschnitt 98 des Kupplungselementes 90, so daß dessen Lage gegenüber der Tragplatte 16/1 mittels der Stellspindel 104 parallel zur Längsmittelebene 89 variabel einstellbar ist. Der Einstellweg ist dabei durch die Breite des Durchbruches 82 begrenzt, welche etwa der Länge des Durchbruches 82 entspricht.

Rechtwinklig zu dieser Bewegungsrichtung bzw. quer zur Längsmittelebene 89 ist das Kupplungselement 90 in seinem Stellschlitz 88 mittels der Stellspindel 95 verschiebbar. Durch Betätigen der Stellspindel 95 an ihrem Antriebssechskant 100 wird das Kupplungselement 90 mit seinem Stellabschnitt 98 durch den Gewindeabschnitt 97 der Stellspindel 95 quer zur Längsmittelebene 89, je nach Drehrichtung, in eine der beiden durch den Doppelpfeil 111 gekennzeichneten Richtungen bewegt und verschiebt sich dementsprechend relativ zur Einstellplatte 85 und damit auch relativ zur Tragplatte 16/1. Der Stellweg für das Kupplungselement 90 quer zur Längsmittelebene ist durch die Länge des Stellschlitzes 88 begrenzt, wobei die Länge des Stellschlitzes 88 der entsprechenden Querausdehnung des Durchbruches 82 entspricht.

Es versteht sich, daß, auch wenn nur eine Hebeeinrichtung vorgesehen ist, eine Absicherung der Tragplatte 16 z.B. durch zwei Sicherheitsstangen erfolgen kann. In diesem Fall sind die Sicherheitsstangen im Bereich der Hebeeinrichtungen aus Fig. 1 und die eine Hebeeinrichtung zentral im Bereich der Sicherheitsstange aus Fig. 1 anzuordnen.

Desweiteren können anstatt der verschiebbaren Kupplungselemente 30, 31, 33 auch einfache Ringschrauben vorgesehen sein (in der Zeichnung nicht dargestellt), welche in unterschiedlichen Positionen z.B. in den Tragbohrungen 17 der Tragplatte 16 lösbar befestigbar sind. Beim Einsatz solcher Ringschrauben ist die Tragplatte 16 ohne Stellschlitze 34, 35, 36 ausgeführt.

Die an der Tragplatte 16, 16/1 bzw. am Trägerelement 18 höhenverstellbaren Zugspindeln 20, 21, 22 können beispielsweise auch als spannschloßartig längenverstellbare Verbindungselemente, an der Tragplatte 16 verschraubte Zugplatten, Zugketten oder Zugbänder ausgebildet sein. Anstatt der Traggabeln 23, 24 können auch Tragbohrungen z.B. am unteren Ende einer Zugplatte oder eines Zughakens vorgesehen sein.

Desweiteren ist vorgesehen, wenn die Aufhängepunkte an einem anzuhebenden Kraftfahrzeugmotor derart angeordnet sind, daß der Kraftfahrzeugmotor beim Anheben gegenüber der Tragplatte 16 bzw. 16/1 auf Grund einer ungünstigen Schwerpunktlage abkippt, zwischen der Tragplatte 16 bzw. 16/1 und dem Kraftfahrzeugmotor eine oder mehrere zusätzliche längeneinstellbare Stützstangen anzuordnen. Ein solches Abkippen des Kraftfahrzeugmotors kann z.B. bei einer Zweipunktaufhängung auftreten, d.h. am Kraftfahrzeugmotor sind lediglich zwei Aufhängepunkte vorgesehen, so daß der Kraftfahrzeugmotor bei einer ungünstigen Schwerpunktlage um eine Achse abkippen kann, welche die beiden Aufhängepunkte miteinander verbindet. Die Stützstangen sind dann entsprechend in den Tragbohrungen 17 der Tragplatte zum Erreichen einer möglichst großen Stabilität verschraubbar, so daß sie auch nicht unbeabsichtigt vom Motorblock und/oder von der Tragplatte abrutschen können.

Durch der erfindungsgemäße Tragplatte 16 bzw. 16/1 wird ein kostengünstiges und einfach herzustellendes Zusatzelement für eine Hebebrücke bereitgestellt, welches es ermöglicht, räumlich unterschiedlich angeordnete Aufhängepunkte an einem Kraftfahrzeugmotor oder -getriebe zum Anheben derselben zu erreichen. Damit ist die Hebebrücke variabel für die verschiedensten Fahrzeugtypen einsetzbar, wobei sie stets an den Stellen auf die Kotflügelmontagestege aufsetzbar ist, welche eine genügend große Stabilität zum Anheben schwerer Bauteile wie z.B. einen Kraftfahrzeugmotor aufweisen.

## Patentansprüche

1. Hebebrücke (3) zum Aus- und Einbauen von Kraftfahrzeugteilen bestehend aus wenigstens einer Tragschiene (8, 9), auf welcher wenigstens eine Hebeeinrichtung (12) angeordnet ist und die an beiden Enden Stützfüße aufweist, mit welchen die Tragschiene (8, 9) an den oberen Rändern eines geöffneten Motorraums (2) eines Kraftfahrzeuges (1) abstützbar ist, wobei die Hebeeinrichtung (12) ein flexibles Zugelement (14, 14/1, 15) aufweist, an welchem ein Kupplungselement (30, 31, 33) befestigbar ist,
**dadurch gekennzeichnet**,
daß zum Anheben der Kraftfahrzeugteile (25) eine im wesentlichen in einer Horizontalebene verlaufende Tragplatte (16, 16/1) vorgesehen ist, welche wenigstens das eine Kupplungselement (30, 31, 33) aufweist, mit welchem die Tragplatte (16, 16/1) am Zugelement (14, 15, 14/1) lösbar befestigt ist, und
daß das Kupplungselement (30, 31, 33) an der Tragplatte (16, 16/1) an unterschiedlichen Stellen anordenbar ist und,
daß an der Tragplatte (16, 16/1) zum Anhängen der Kraftfahrzeugteile (25) ein oder mehrere an verschiedenen Stellen der Tragplatte (16, 16/1) befestigbare Verbindungselemente (20, 21, 22) vorgesehen sind.

2. Hebebrücke nach Anspruch 1, dadurch gekennzeichnet, daß das Kupplungselement (30, 31, 33) als Ringschraube ausgebildet ist, welche an unterschiedlichen Stellen der Tragplatte (16) an der Tragplatte (16) befestigbar ist.

3. Hebebrücke nach Anspruch 1, dadurch gekennzeichnet,
daß die Tragplatte (16) im wesentlichen rechteckförmig ausgebildet ist und mit ihrer Längsmittelachse in Ausgangslage etwa parallel zur Tragschiene (8, 9) verläuft und,
daß das Kupplungselement (30, 31, 33) in einem im wesentlichen quer zur vertikalen Längsmittelebene der Tragplatte (16) verlaufenden Stellschlitz (34, 35, 36) der Tragplatte (16) verschiebbar angeordnet ist und,
daß die Position des Kupplungselementes (30, 31, 33) im Stellschlitz (34, 35, 36) mittels einer Stellspindel (37, 38, 39) einstellbar und feststellbar ist.

4. Hebebrücke nach einem der Ansprüche 1 bis 3, dadurch gekennzeichnet, daß auf der Tragschiene (8, 9) im Abstand voneinander zwei Hebeeinrichtungen (12, 13) vorgesehen sind, deren Zugelemente (14, 15) jeweils einem Kupplungselement (30, 31) an der Tragplatte (16) zugeordnet sind und,
daß etwa symmetrisch zwischen den Zugelementen (14, 15) und den Kupplungselementen (30, 31) zur Entlastung der Zugelemente (14, 15) bei angehobener Tragplatte (16) eine längenverstellbare Sicherheitsstange (32) angeordnet ist, welche an der Tragschiene (8, 9) längsverschiebbar gelagert ist und an einem separaten Kupplungselement (33) der Tragplatte (16) befestigbar ist, wobei das Kupplungselement (33) der Sicherheitsstange (32) an verschiedenen Stellen der Tragplatte (16) befestigbar ist oder in einem im wesentlichen quer zur Tragschiene (8, 9) bzw. zur Tragplatte (16) verlaufenden Stellschlitz (35) mittels einer Stellspindel (38) verschiebbar angeordnet ist.

5. Hebebrücke nach Anspruch 4, dadurch gekennzeichnet, daß die Sicherheitsstange (32) an ihrem Kupplungselement (33) der Tragplatte (16) schwenkbar befestigt ist.

6. Hebebrücke nach einem der Ansprüche 1 bis 5, dadurch gekennzeichnet, daß die Verbindungselemente zum (20, 21, 22) Anhängen der Kraftfahrzeugteile wenigstens eine Tragbohrung, Traggabel (23, 24) oder einen Zughaken aufweisen und als Zugplatten und/oder Zugspindeln (20, 21, 22) und/oder Zugketten und/oder Zugbänder ausgebildet sind und die Tragplatte (16) zum Befestigen der Verbindungselemente (20, 21, 22) mehrere Tragbohrungen (17, 17/1, 17/2, 17/3, 17/4, 17/5) aufweist.

7. Hebebrücke nach einem der Ansprüche 1 bis 6, dadurch gekennzeichnet, daß wenigstens ein zusätzliches über die Tragplatte (16) hinausstehendes Trägerelement (18) zum Anhängen der Kraftfahrzeugteile (25) vorgesehen ist, welches bezüglich der Tragplatte (16) in unterschiedlichen Richtungen ausgerichtet an den Tragbohrungen (17, 17/1, 17/2, 17/3, 17/4, 17/5) befestigbar ist und das ein oder mehrere Trägerbohrungen (19) zum Befestigen der Verbindungselemente (20, 21, 22) aufweist.

8. Hebebrücke nach einem der Ansprüche 1 bis 7, dadurch gekennzeichnet, daß die Verbindungselemente (20, 21, 22) höhenverstellbar an der Tragplatte (16) und/oder am Trägerelement (18) befestigbar sind und/oder daß die Verbindungselemente (20, 21, 22) in ihrer Länge verstellbar ausgebildet sind.

9. Hebebrücke nach Anspruch 1, dadurch gekennzeichnet,
daß die Tragplatte (16/1) im wesentlichen rechteckförmig ausgebildet ist und an ihrer Unterseite eine Einstellplatte (85) aufweist, welche mit einem längs oder quer zur Längsmittelachse (89) der Tragplatte (16/1) verlaufenden Stellschlitz (88) versehen ist, in welchem das Kupplungselement (90) mittels einer Stellspindel (95) variabel verschiebbar und feststellbar angeordnet ist, und
daß die Einstellplatte (85) bezüglich der Tragplatte (16/1) mittels einer Stellpindel (104) rechtwinklig zum Stellschlitz (88) an der Tragplatte (16/1) verschiebbar und feststellbar ist, wobei die Einstellplatte (85) in ihrer Stellrichtung (Doppelpfeil 110) an der Tragplatte (16/1) durch Führungsschienen (86, 87) geführt ist, und
daß das Kupplungselement (90) den Stellschlitz (88) und einen in der Tragplatte (16/1) oberhalb der Einstellplatte (85) angeordneten Druchbruch (82) von unten nach oben durchragt.

## Claims

1. Lifting bridge (3) for removing and installing motor vehicle parts consisting of at least one support rail (8, 9), on which at least one lifting device (12) is located and which at both ends comprises support feet, by which the support rail (8, 9) can be supported on the upper edges of an open engine compartment (2) of a motor vehicle (1), the lifting device (12) comprising a flexible pulling member (14, 14/1, 15), to which a coupling member (30, 31, 33) can be attached, characterised in that provided for raising the motor vehicle parts (25) is a support plate (16, 16/1) extending essentially in a horizontal plane, which comprises at least one coupling member (30, 31, 33), by which the support plate (16, 16/1) can be releasably fastened to the pulling member (14, 15, 14/1) and that the coupling member (30, 31, 33) can be located on the support plate (16, 16/1) at different points and that provided on the support plate (16, 16/1) for suspending the motor vehicle parts (25) are one or more connecting members (20, 21, 22) able to be attached at different points of the support plate (16, 16/1).

2. Lifting bridge according to Claim 1, characterised in that the coupling member (30, 31, 33) is constructed as an eyebolt, which can be fastened to the support plate (16) at different points of the support plate (16).

3. Lifting bridge according to Claim 1, characterised in that the support plate (16) has an essentially rectangular construction and extends with its longitudinal central axis in the initial position approximately parallel to the support rail (8, 9) and that the coupling member (30, 31, 33) is arranged to slide in an adjusting slot (34, 35, 36) in the support plate (16), extending essentially at right angles to the vertical longitudinal central plane of the support plate (16), and that the position of the coupling member (30, 31, 33) in the adjusting slot (34, 35, 36) can be adjusted and fixed by means of an adjusting spindle (37, 38, 39).

4. Lifting bridge according to one of Claims 1 to 3, characterised in that provided on the support rail (8, 9) at a distance apart are two lifting devices (12, 13), whereof the pulling members (14, 15) are respectively associated with a coupling member (30, 31) on the support plate (16) and that located approximately symmetrically between the pulling members (14, 15) and the coupling members (30, 31) for relieving the load on the pulling members (14, 15) when the support plate (16) is raised, is a longitudinally adjustable safety rod (32), which is mounted to slide longitudinally on the support rail (8, 9) and can be attached to a separate coupling member (33) of the support plate (16), the coupling member (33) of the safety rod (32) being able to be fastened to different points of the support plate (16) or being arranged to slide by means of an adjusting spindle (38) in an adjusting slot (35) extending essentially at right angles to the support rail (8, 9) or to the support plate (16).

5. Lifting bridge according to Claim 4, characterised in that the safety rod (32) is mounted to tilt at its coupling member (33) of the support plate (16).

6. Lifting bridge according to one of Claims 1 to 5, characterised in that the connecting members (20, 21, 22) for the suspension of the motor vehicle parts comprise at least one support bore, support fork (23, 24) or a pulling hook and are constructed as pulling plates and/or pulling spindles (20, 21, 22) and/or pulling chains and/or pulling bands and for attaching the connecting members (20, 21, 22), the support plate (16) comprises several support bores (17, 17/1, 17/2, 17/3, 17/4, 17/5).

7. Lifting bridge according to one of Claims 1 to 6, characterised in that at least one additional support member (18) projecting beyond the support plate (16) is provided for the suspension of the motor vehicle parts (25), which support member can be attached at the support bores (17, 17/1, 17/2, 17/3, 17/4, 17/5) aligned in different directions with respect to the support plate (16) and which comprises one or more support bores (19) for fastening the connecting members (20, 21, 22).

8. Lifting bridge according to one of Claims 1 to 7, characterised in that the connecting members (20, 21, 22) can be fastened in a vertically adjustable manner to the support plate (16) and/or to the support member (18) and/or the connecting members (20, 21, 22) are constructed to be adjustable in their length.

9. Lifting bridge according to Claim 1, characterised in that the support plate (16/1) is constructed to be essentially rectangular and on its under side comprises an adjusting plate (85), which is provided with an adjusting slot (88) extending along or at right angles to the longitudinal central axis (89) of the support plate (16/1), in which slot the coupling member (90) is arranged to be able to slide in a variable manner and to be fixed by means of an adjusting spindle (95), and that the adjusting plate (85) is displaceable and can be fixed with respect to the support plate (16/1) by means of an adjusting spindle (104) at right angles to the adjusting slot (88) on the support plate (16/1), the adjusting plate (85) being guided in its adjusting direction (double arrow 110) on the support plate (16/1) by guide rails (86, 87) and that the coupling member (90) projects from below upwards through the adjusting slot (88) and an opening (82) located in the support plate (16/1) above the adjusting plate (85).

## Revendications

1. Pont élévateur (3) pour la dépose et la pose d'éléments de véhicules automobiles, constitué d'au moins une barre support (8, 9) sur laquelle est placé au moins un dispositif élévateur (12) et qui présente aux deux extrémités des pieds d'appui par lesquels la barre support (8, 9) peut s'appuyer sur les bords supérieurs d'un compartiment moteur (2) ouvert d'un véhicule automobile (1), le dispositif élévateur (12) présentant un élément tracteur flexible (14, 14/1, 15) auquel peut être fixé un élément d'accouplement (30, 31, 33), caractérisé par le fait
que pour le soulèvement des éléments de véhicule automobile (25) est prévue une plaque support (16, 16/1) s'étendant sensiblement dans un plan horizontal qui présente au moins l'élément d'accouplement (30, 31, 33) par lequel la plaque support (16, 16/1) est fixée de manière détachable à l'élément tracteur (14, 15, 14/1), et que l'élément d'accouplement (30, 31, 33) peut être placé à différents endroits sur la plaque support (16, 16/1), et
que sur la plaque support (16, 16/1) sont prévus pour l'accrochage des éléments de véhicule automobile (25) un ou plusieurs éléments de liaison (20, 21, 22) qui peuvent être fixés à différents endroits de la plaque support (16, 16/1).

2. Pont élévateur selon la revendication 1, caractérisé par le fait que l'élément d'accouplement (30, 31, 33) est constitué d'un boulon à oeil qui peut être fixé à la plaque support (16) à différents endroits de celle-ci.

3. Pont élévateur selon la revendication 1, caractérisé par le fait que la plaque support (16) est sensiblement rectangulaire et son axe longitudinal, en position initiale, est à peu près parallèle à la barre support (8, 9), que l'élément d'accouplement (30, 31, 33) est monté mobile dans une fente de manoeuvre (34, 35, 36) de la plaque support (16) qui s'étend sensiblement perpendiculairement au plan médian longitudinal vertical de celle-ci, et que la position de l'élément d'accouplement (30, 31, 33) dans la fente de manoeuvre (34, 35, 36) peut être réglée et fixée au moyen d'une vis de manoeuvre (37, 38, 39).

4. Pont élévateur selon l'une des revendications 1 à 3, caractérisé par le fait que sur la barre support (8, 9) sont prévus à distance l'un de l'autre deux dispositifs élévateurs (12, 13) dont les éléments tracteurs (14, 15) sont associés chacun à un élément d'accouplement (30, 31) sur la plaque support (16), et
qu'à peu près symétriquement entre les éléments tracteurs (14, 15) et les éléments d'accouplement (30, 31) est placée, pour la décharge des éléments tracteurs (14, 15), lorsque la plaque support (16) est soulevée, une tige de sécurité (32) réglable en longueur qui est montée mobile longitudinalement sur la barre support (8, 9) et peut être fixée à un élément d'accouplement séparé (33) de la plaque support (16), l'élément d'accouplement (33) de la tige de sécurité (32) pouvant être fixé à différents endroits de la plaque support (16) ou étant monté mobile au moyen d'une vis de manoeuvre (38) dans une fente de manoeuvre (35) qui s'étend sensiblement perpendiculairement à la barre support (8, 9) ou à la plaque support (16).

5. Pont élévateur selon la revendication 4, caractérisé par le fait que la tige de sécurité (32) est fixée de façon articulée à son élément d'accouplement (33) à la plaque support (16).

6. Pont élévateur selon l'une des revendications 1 à 5, caractérisé par le fait que les éléments de liaison (20, 21, 22) présentent, pour l'accrochage des éléments de véhicules automobiles, au moins un trou support, une fourche support (23, 24) ou un crochet de traction, et sont constitués de plaques de traction et/ou de vis de traction (20, 21, 22) et/ou de chaînes de traction et/ou de bandes de traction, et la plaque support (16) présente plusieurs trous supports (17, 17/1, 17/2, 17/3, 17/4, 17/5) pour la fixation des éléments de liaison (20, 21, 22).

7. Pont élévateur selon l'une des revendications 1 à 6, caractérisé par le fait que pour l'accrochage des éléments de véhicules automobiles (25) est prévu au moins un élément porteur supplémentaire (18) dépassant de la plaque support, (16) qui peut être fixé aux trous supports (17, 17/1, 17/2, 17/3, 17/4, 17/5) en étant orienté dans différentes directions par rapport à la plaque support (16) et qui présente un ou plusieurs trous porteurs (19) pour la fixation des éléments de liaison (20, 21, 22).

8. Pont élévateur selon l'une des revendications 1 à 7, caractérisé par le fait que les éléments de liaison (20, 21, 22) peuvent être fixés de manière réglable en hauteur à la plaque support (16) et/ou à l'élément porteur (18), et/ou que les éléments de liaison (20, 21, 22) sont de longueur réglable.

9. Pont élévateur selon la revendication 1, caractérisé par le fait que la plaque support (16/1) est sensiblement rectangulaire et présente sur sa face inférieure une plaque de réglage (85) qui est pourvue d'une fente de manoeuvre (88) qui s'étend longitudinalement ou perpendiculairement à l'axe longitudinal (89) de la plaque support (16/1) et dans laquelle l'élément d'accouplement (90) est monté mobile, de manière variable au moyen d'une vis de manoeuvre (95), et immobilisable,
que la plaque de réglage (85) est mobile par rapport à la plaque support (16/1) sur celle-ci, perpendiculairement à la fente de manoeuvre (88), au moyen d'une vis de manoeuvre (104), et immobilisable, et est guidée dans sa direction de manoeuvre (double flèche 110) sur la plaque support (16/1) par des barres de guidage (86, 87), et
que l'élément d'accouplement (90) traverse de bas en haut la fente de manoeuvre (88) et un jour (82) fait dans la plaque support (16/1) au-dessus de la plaque de réglage (95).
